# EUROPEAN PATENT APPLICATION

(11) **EP 0 547 842 A1**
(43) Date of publication of application: **23.06.1993**
(21) Application number: 92311308.8
(22) Date of filing: 10.12.1992
(51) Int. Cl.: B60R 21/26

(54) **Air bag inflator**

(30) Priority: 16.12.1991 US 807198
(71) Applicant: AUTOMOTIVE SYSTEMS LABORATORY INC., Farmington Hills Michigan 48331 (US)
(72) Inventor: LeTendre, Guy R., Bellevue, Washington 98052 (US)
(74) Representative: Senior, Alan Murray

(57) **Abstract**

A light weight solid propellant gas generator incorporates stayed gas cooling and impact- filtration to generate cool, clean gases having a composition suitable for inflating an automotive air bag.

## Description

### BACKGROUND OF THE INVENTION

Inflatable vehicle occupant restraint devices have now proved their value in saving lives in auto accidents. With increased utilization of this life saving product, the auto industry is looking for a less expensive and lighter air bag inflator. Since the filter is the heaviest and one of the most expensive components of an air bag inflator, it has received close attention.

Conventional air bag inflators incorporate an internal filter to prohibit solid and liquid combustion products from entering the restraint bag. To properly filter the combustion gases, known filters often comprise multiple wraps of metal screen combined with fibrous materials. Such known filters have proved to be heavy, relatively expensive to manufacture, and to exhibit variable pressure drop.

For example, a typical conventional filter consists of a perforated steel tube of a diameter and a length related to the application. Typically, 3 to 4 layers or more of steel screen of varying mesh sizes and wire diameters, are wrapped around the perforated tube. The layers of screen form sites on which the liquid combustion products condense and solidify, while the other products of combustion, namely gases and solids travel through them. The combustion products thereafter pass through a bed of metal and/or ceramic fibers which may be compressed between two more layers of finer mesh steel screen to remove the fine solid particles. The exiting gas temperature is also reduced, due in large part to heat transfer to the metal screens in the filter.

The aforesaid problems were addressed in U.S. Patent 3,843,151, entitled "Particle Engaging Screen Device for Pyrotechnic System", that issued to Donald J. Lewis. This patent describes a filter that filters solid particles after they exit the inflator and enter the inflation bag. A fine mesh screen placed outside of the inflator as part of the manifold allows most of the products of combustion to pass, filtering only the solid particles that are larger than the filter screen openings.

U.S. Patent 4,840,397, entitled "Impact Protection Device for the Occupants of Motor Vehicles with a Filter to Clean the Driving Gas", issued to Egon Katz, et al., discloses an external filter comprising a panel of fabric in the inflatable cushion for filtering solid residue from the combustion gas prior to release into the vehicle passenger compartment. The filter comprises a woven fabric that allows the gas to vent during the crash while also ensuring the vehicle is free from possible harmful effects from the gas generant's solid residue.

U.S. Patent 4,878,690, entitled "Light Weight Vehicle Restraint Bag Inflator", issued to Donald J. Cun- ningham, teaches filtering in a plurality of stages by directing the combustion products through a tortuous path. Afilter, comprising several layers of metal mesh screens and ceramic fibrous material, filters solid particulates from the gas. After exiting the inflator, the gases impinge onto a secondary element that redirects the gas into the bag. Thus, filtering is achieved after the liquid products of combustion have cooled to solids and subsequently the majority of the filtering is performed by the ceramic fibrous materials.

### SUMMARY OF THE INVENTION

The solution to the problem of reducing air bag inflator cost and weight, in accordance with the present invention, is predicated on the concept that it is desirable to (a) utilize impingement surface area to condense and impact-filter the combustion products in lieu of screens, and (b) final-filter the gases after the liquid products of combustion have cooled to solid particles without significant heat energy loss from the gases. By removing the conventional filter from the gas generator and directing the gas outlet orifices thereof toward an impact or condensation panel forming the rear of the inflator module, propellant slag is condensed and deposited or plated on the rear panel of the module. Gas momentum change at the back of the module is such that the hot gases travel freely from the condensation panel while leaving the heavier liquids and solids deposited thereon. A final filter stage in the form of one or more simple screen layers is added to protect the bag and occupant from any residual hot particles that still may be flowing with the exhaust gases. The use of the filtration system of the present invention is not only relatively light and inexpensive, but allows the use of relatively small propellant loads and subsequently a smaller inflator as the conventional, relatively expensive, heavy and energy absorbing filter is no long necessary.

### BRIEF DESCRIPTION OF THE DRAWINGS

Fig. 1 is an exploded perspective view of an air bag inflator in accordance with the present invention;
Fig. 2 is a longitudinal cross section through the gas generator and inflator;
Fig. 3 is a cross-sectional view taken along the line 3-3 of Fig. 2; and
Fig. 4 is a view similar to Fig. 3 showing plating of the combustion products on the gas generator cannister and inflator housing.

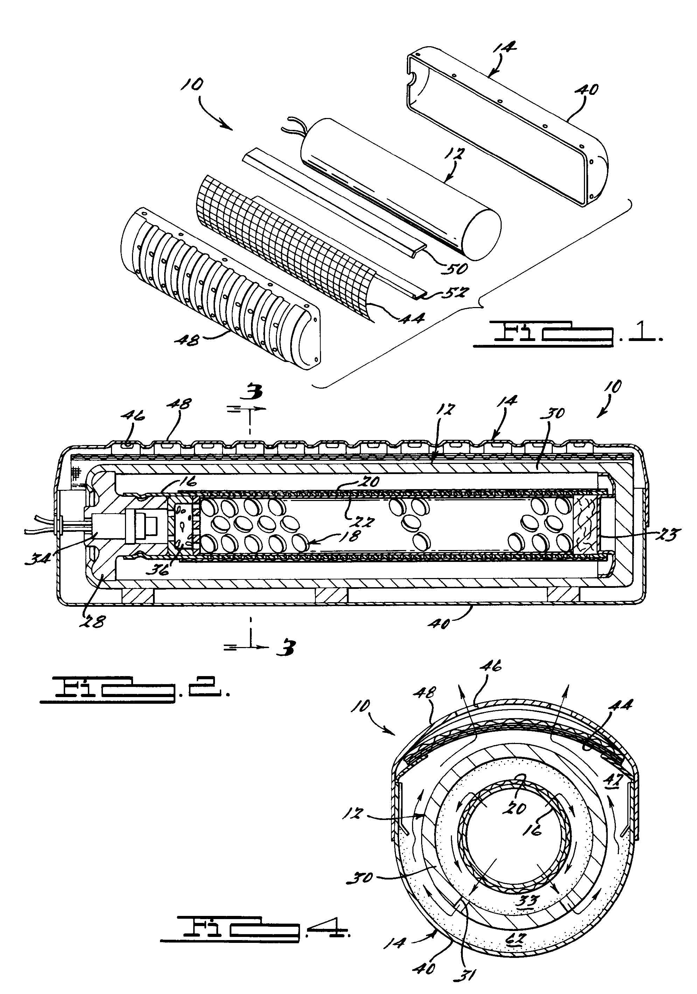

### DETAILED DESCRIPTION OF THE PREFERRED EMBODIMENT OF THE INVENTION

An air bag inflator 10 in accordance with a preferred constructed embodiment of the invention comprises two major components, namely, a gas generator 12 and an external housing 14. The gas generator 12 comprises, in a preferred constructed embodiment, a propellant tube 16 made of perforated 1018 steel sheet with .063" diameter holes 17 on .109" staggered centers. The tube 16 is 1.05" in diameter and 8.16" long. The perforated tube 16 holds a plurality of propellant grains 18 in place prior to ignition and acts as the foundation for an external prefilter screen 20 and an internal .001 " thick aluminum burst foil 22. The tube 16 is supported at one end by a tube support disc 23 and at the other end by an end closure 28 of a high pressure cylinder 30. The prefilter screen 20 comprises a 20 mesh screen of .023" 1018 steel wire wrapped around the perforated tube 16 and spot welded thereto. The screen 20 ensures that the propellant grains 18 are retained within the confines of the perforated tube 16 during combustion. The aluminum foil 22 provides protection for the gas generant grains 18 from the atmosphere and from the possibly rough surface of the perforated tube 16.

In accordance with one feature of the present invention, the high pressure cylinder 30 is disposed in radially spaced relation to the propellant tube 16 so as to define a first stage plenum 33 and to function as a first stage impingement surface for impact-filtering of the combustion products emanating from the propellant tube 16. The cylinder 30 is made of 6061- T6, impact formed, aluminum and is 9.19" long with a 1.75" ID and a 2.04" OD. The cylinder 30 has a plurality of apertures 31 therein for the discharge of combustion gases produced in the propellant tube 16. The apertures 31 are oriented angularly to direct the discharging combustion gases generally rearward toward the aft wall 40 of the housing 14. The end closure 28 is crimped to the open end of the cylinder 30 to seal the generator 12. The end closure 28 also supports a conventional squib 34 and positions a conventional auxiliary booster charge 36.

In accordance with another feature of the present invention, the housing 14 is disposed externally to the high pressure cylinder 30 in radially spaced relation thereto so as to define a second stage plenum 42 and to effect secondary impact-filtering of the combustion products. The housing 14 comprises an aft wall portion 40 made of .036" thick 304 stainless steel sheet which forms the secondary surface on which the products of combustion ejected through the apertures 31 in the cylinder 30 impinge. The aft wall 40 of the housing 14 is of arcuate cross section so as to direct the gaseous combustion products circumferentially around the cylinder 30 through the plenum 42 to a final filter 44. Gas is thereafter discharged through a plurality of apertures 46 in a housing cover member 48. A pair of particle traps 50 and 52 separate particles from the gas flow along the aft wall portion 40 of the housing 14. The traps 50 and 52 direct gases into the plenum 42, stopping the plating of solids from continuing onto the filter 44.

The final filter 44 comprises, for example, 4 layers of screen. The first and third layers of screen are 30 mesh .016" diameter wire. A 100 mesh .0045" diam- eterwire screen is disposed between the 1st and 3rd layers. The three layers of screen are disposed in front of a coarse screen made of 6 mesh .035" diameter wire. Optionally, one or more layers of fiberglass cloth or ceramic felt material may be incorporated with appropriate support into the final filter 44. The final filter 44 is supported by the 0.36" thick cover member 48. The apertures 46 in the cover member 48 serve as secondary choking orifices for both flow direction and velocity control. The aft and cover wall portions 40 and 48, respectively, form thermal standoffs from the generator 12 that prevent the outside of the module 10 from exceeding soakback temperature requirements.

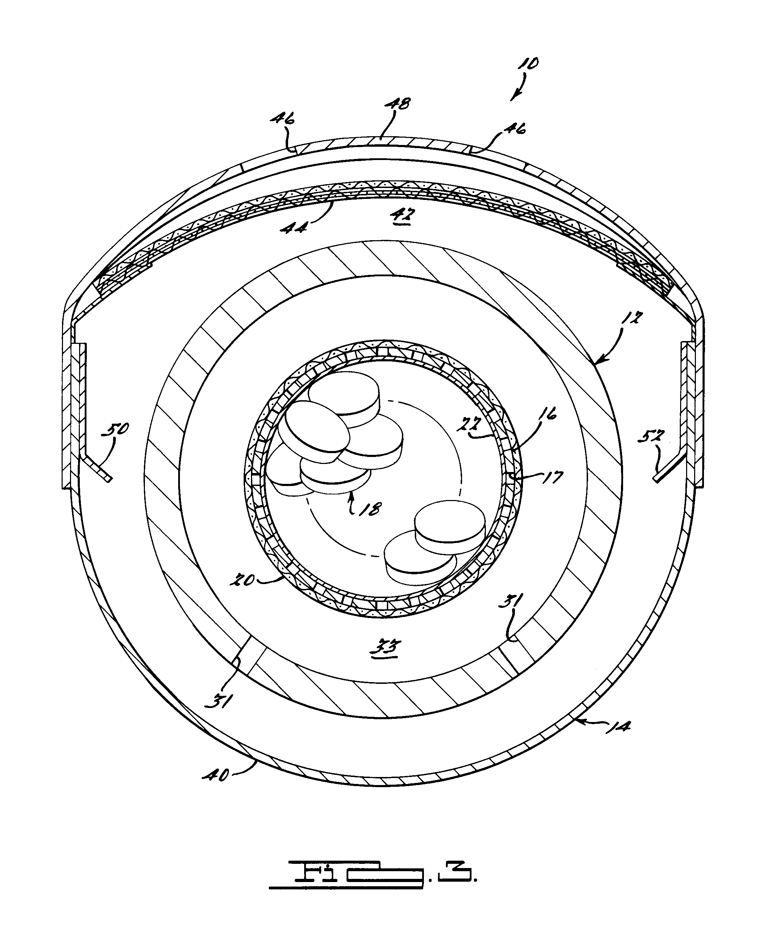

During normal operation, the propellant grains 18 are ignited by the squib 34 yielding solid, liquid and gaseous products. The solids, molten slag and gases then exit the propellant tube 16 through the orifices therein and screen 20 and enter a primary cooling and filtration stage wherein they impinge on the radially in- nerwall of the high pressure cylinder 30. The combustion products are cooled and, as seen in Fig. 4, solids and molten slag deposits 60 are "plated" on the inner wall of the cylinder 30 in the primary cooling and filtration stage. The combustion products then exit the cylinder 30 through the orifices 31 therein and impinge onto the aft wall portion 40 of the housing 14 where remaining molten slag deposits 62 freeze and coat the radially inner surface of the aft wall portion 40 of the housing 14 with a thin layerofslag material. The remaining combustion products then travel circumferentially around the high pressure cylinder 12, to the final filter 44. At this point the products of combustion are relatively easy to final filter with a fine mesh screen. By impact-filtering most of the non-gaseous products in the liquid form by "plating" along the aft wall 40 of the inflator housing 14, only a relatively small amount of solid particulates need to be removed from the gas flow in the light weight final filter 44.

While the preferred embodiment of the invention has been disclosed, it should be appreciated that the invention is susceptible of modification without departing from the scope of the following claims.

## Claims

1. An impact-filtered air bag inflator comprising,
a cylindrical propellant tube having a plurality of relatively small apertures therein;
a propellant in said propellant tube;
means for igniting said propellant;
a cylindrical high pressure cylinder disposed about said propellant tube in coaxial and radially spaced relation thereto so as to define a first cylindrical gas cooling and expansion plenum therebetween, said high pressure cylinder having a plurality of axially aligned relatively small apertures disposed within a 90° arc on one side thereof for the discharge of combustion products of said propellant from said plenum; and
an inflator housing disposed about said high pressure cylinder in radially spaced relation thereto so as to define a second cylindrical gas cooling and expansion plenum, said housing having a plurality of gas discharge apertures therein diametrically opposed to the apertures in said high pressure cylinder whereby gas produced in said propellant tube flows radially therefrom through said first plenum to impinge and condense on the radially inner wall of said high pressure cylinder as a primary stage of filtration, said gases then being constrained to flow circumferentially of said high pressure cylinder along the interior wall thereof to the apertures therein, thence radially through said second plenum to impinge and condense on the radially inner wall of said housing as a secondary stage of filtration, thence circumferentially along the radially inner wall of said housing for discharge radially through the apertures therein.

2. An inflator in accordance with claim 1 including a first screen disposed about the exterior of said propellant tube.

3. An inflator in accordance with claim 1 including a pair of diametrically related particle traps on the radially inner wall of said housing.

4. The inflator of claim 1 wherein a final filter is disposed inside of the outlet apertures of the housing.

5. The inflator of claim 1 wherein the housing is constructed of stainless steel.

6. The inflator of claim 1 incorporating a sealing and burst foil disposed on the inner wall of the propellant tube.

7. The inflator of claim 1 wherein said high pressure cylinder is aluminum.

8. The inflator of claim 1 wherein said housing comprises aft and cover sections joined to one another along lines parallel to the central axis of said propellant tube.
